# EUROPÄISCHE PATENTSCHRIFT

(11) **EP 1 228 949 B1**
(45) Veröffentlichungstag und Bekanntmachung des Hinweises auf die Patenterteilung: **13.10.2004**
(21) Anmeldenummer: 01126899.2
(22) Anmeldetag: 13.11.2001
(51) Int. Cl.: B62D 25/08, B62D 25/20

(54) **Personenkraftwagen mit Einzelradaufhängung und einem Fahrschemel**
Passenger car with independant suspension and a subframe
Véhicule automobile avec suspension indépendante et chassis auxiliaire

(30) Priorität: 31.01.2001 DE 10104040
(43) Veröffentlichungstag der Anmeldung: 07.08.2002
(73) Patentinhaber: Bayerische Motoren Werke Aktiengesellschaft, 80809 München (DE)
(72) Erfinder: Gratzl, Markus, 85221 Dachau (DE)

(56) Entgegenhaltungen:
- US-A- 4 258 820
- US-A- 4 746 146
- US-A- 5 797 647

## Beschreibung

Die Erfindung betrifft einen Personenkraftwagen mit Einzelradaufhängung an der Hinterachse, wobei jeweils zumindest zwei der die beiden Hinterachs-Radträger führenden Lenker an einem gemeinsamen Fahrschemel angebunden sind, der sich über zwei vordere sowie hintere Befestigungspunkte an der Fahrzeug-Karosserie abstützt, und wobei im wesentlichen zwischen den beiden vorderen Befestigungspunkten in Fahrzeug-Querrichtung eine mit ihren Enden am Fahrschemel angelenkte Schubstrebe verläuft. Zum technischen Umfeld wird neben der nicht vorveröffentlichten deutschen Patentanmeldung 100 19 391 beispielsweise auf den Beitrag "Die neue Zentral-Lenker-Hinterachse der BMW 3er-Baureihe" in der Automobiltechnischen Zeitschrift ATZ 93(1991) Seite 274 ff. verwiesen.

Für übliche Einsatzbedingungen haben sich Einzelradaufhängungen nach dem Oberbegriff des Anspruchs 1 an Personenkraftwagen grundsätzlich bewährt, d.h. sie stellen zumeist einen nahezu optimalen Kompromiss zwischen dem nötigen Fahrkomfort einerseits und der gewünschten Fahrstabilität und Agilität andererseits dar. Ein Beispiel für eine derartige Hinterachs-Einzelradaufhängung ist im eingangs zweitgenannten ATZ-Beitrag ausführlich beschrieben, wobei ein wesentlicher Einflußfaktor auf das Fahrverhalten des Personenkraftwagens durch die sog. Elastokinematik gebildet wird, d.h. durch individuelle Lageveränderungen der Lenker unter Krafteinwirkung aufgrund deren mehr oder weniger elastischer endseitiger Anbindung.

Dabei sind nicht nur die die Radträger führenden Lenker elastisch am genannten Fahrschemel oder an der Fahrzeug-Karosserie angebunden, sondern es ist auch der Fahrschemel selbst - insbesondere zur Verringerung der Körperschall-Übertragung - unter Zwischenschaltung dämpfender und daher ebenfalls in gewissem Umfang elastischer Elemente letztlich an der Fahrzeug-Karosserie befestigt.

Zur Erzielung einer ausgeprägten Agilität eine PKW's, die ein sportliches Fahrverhalten insbesondere im Kurvenbereich ermöglicht, wäre eine vergrößerte Steifigkeit der Fahrzeug-Karosserie im Hinterachs- oder Heckbereich in der horizontalen Ebene wünschenswert, die aber oftmals aus Bauraumgründen, nämlich bspw. im Hinblick auf das Erfordernis, einen Kraftstofftank unterbringen zu müssen, nicht ohne weiteres erzielbar ist.

Mit der vorliegenden Erfindung soll nun eine relativ einfache und dabei effektive Möglichkeit zur Erhöhung der Heck-Steifigkeit an einem Personenkraftwagen nach dem Oberbegriff des Anspruchs 1 aufgezeigt werden, mit welcher auch der Geradeauslauf des Fahrzeugs verbessert werden kann (=Aufgabe der vorliegenden Erfindung).

Die Lösung dieser Aufgabe ist dadurch gekennzeichnet, dass die sog. Schubstrebe, welche quasi die vorderen Befestigungspunke des Fahrschemels miteinander verbindet, über ein flächiges sog. Schubfeld an dem in Fahrtrichtung betrachtet vor der Hinterachse liegenden und parallel verlaufenden Fersenblech der Karosserie das den hinteren Fahrzeuginnenraum nach unten begrenzt. abgestützt ist, Vorteilhafte Aus- und Weiterbildungen sind Inhalt der abhängigen Ansprüche.

Erfindungsgemäß ist der Fahrschemel neben seinen eigentlichen Befestigungspunkten an einem relativ steifen Element des Karosserie-Bodenbleches abgestützt, nämlich am sog. Fersenblech, welches im Prinzip den hinteren Abschnitt des Innenraum-Bodenbleches bildet. In diesem Bereich ist eine Fahrzeug-Karosserie grundsätzlich relativ steif, insbesondere wenn das hintere Ende dieses Fersenbleches noch in einen Querträger übergeht. Indem diese zusätzliche Abstützung unter Zwischenschaltung der genanten Schubstrebe erfolgt, kann gleichzeitig sowohl eine gewisse Versteifung in Fzg.-Querrichtung als auch die gewünschte Abstützung in Fzg.Längsrichtung erreicht werden. Hierzu dient das an der Schubstrebe befestigte sog. Schubfeld.

Beim Schubfeld handelt es sich um ein im wesentlichen flächiges Blechteil, das einerseits an der Schubstrebe und dabei bevorzugt an deren Mittenabschnitt befestigt ist und andererseits am besagten Fersenblech. Bevorzugt verbreitert sich das sog. Schubfeld ausgehend von der Befestigungsstelle an der Schubstrebe in Fzg.-Querrrichtung bei Betrachtung in Fzg.-Fahrtrichtung, wodurch gleichzeitig Längskräfte und Querkräfte aus dem Fahrschemel verbessert in das Fersenblech übertragen bzw. eingeleitet werden können. Bevorzugt ist dabei das Schubfeld an seinen Abstützstellen mit den genannten Elementen, nämlich der Schubstrebe einerseits und dem Fersenblech andererseits, verschraubt, um im Reparaturfall eine einfache Zugangsmöglichkeit und Austauschmöglichkeit zu schaffen.

Neben der genannten mechanischen Versteifungsfunktion bringt sog. das Schubfeld auch akustische Vorteile, denn durch die quasi zusätzliche Anbindung des Fahrschemels bzw. Hinterachs-Trägers über dieses Schubfeld wird der (akustische) Eingangswiderstand dieser Anbindung bezüglich höherfrequenter Schwingungen erhöht, so dass eine verbesserte Isolation gegenüber Fahrbahngeräuschen sowie Getriebegeräuschen erreichbar ist.

Zurückkommend auf die mechanische Versteifung kann das Schubfeld mit geeigneten, bevorzugt in Fahrzeug-Querrichtung verlaufenden Sicken oder dgl. versehen und hierdurch derart in sich versteift sein, dass insbesondere im Hinblick auf einen Seitenaufprall die beiden Fahrzeug-Längsseiten im Bereich dieses Schubfeldes und somit auch im Bereich des Fersenbleches miteinander verbunden sind. Als Folge können die aus einem solchen Aufprall resultierenden Deformationen durch die Kraft- und Momentenübertragung auf die andere Fahrzeugseite reduziert bzw. minimiert werden.

Wenn das Schubfeld über die Schubstrebe hinaus nach hinten (und somit entgegen Fahrtrichtung) verlängert ist, so kann das Schubfeld weitere Funktionen übernehmen. Anstelle des Schubfeldes selbst kann aber auch eine sog. Abdeckung desselben, die von unten her auf das Schubfeld aufgebracht ist, über die Schubstrebe nach hinten hinaus verlängert sein und weitere Funktionen (beispielsweise neben einer vorteilhaften Versteifungsfunktion des Schubfeldes selbst) übernehmen. Insbesondere ist in diesem Zusammenhang an eine gezielte Luftleitfunktion gedacht, wobei mit einer gewünschten Umströmung bei höheren Fzg.-Geschwindigkeiten bspw. der Heckauftriebswert des PKW verringert werden kann. Ferner kann das Schubfeld oder deren Abdeckung einen Einlaufkanal für den bei Fahrt an der Oberfläche entlangstreichenden Luftstrom aufweisen, so dass vom Schubfeld verdeckte, oberhalb desselben und somit zwischen dem Schubfeld und dem Fzg.-Aufbau liegende Bauteile durch den Fahrtwind gezielt gekühlt werden können.

Wenn das Schubfeld oder dessen Abdeckung über die Schubstrebe nach hinten hinaus verlängert ist, so kann der hintere Endabschnitt des Schubfeldes bzw. der Abdeckung bspw. zusammen mit V-förmig angeordneten Streben, die im wesentlichen von der Fahrzeug-Mittenlinie aus zu den beidseitig im wesentlichen zwischen den Hinterrädern und Vorderrädern vorgesehenen Längsträgern verlaufen, letztlich am Karosserie-Bodenblech befestigt sein. Diese Maßnahme führt zu einer weiteren Versteifung der Fzg.-Karosserie im gewünschten Sinne, wobei die Außenkontur des nach hinten verlängerten Schubfeldes oder der nach hinten verlängerten Abdeckung zumindest abschnittsweise den besagten V-förmig angeordneten Streben folgen kann.

Das Schubfeld oder deren Abdeckung kann mit Aufnahmen zur Befestigung der Fahrzeug-Abgasanlage versehen sein und somit eine Zusatzfunktion als Träger übernehmen. Ohne dabei nennenswerte Steifigkeitseinbußen in Kauf nehmen zu müssen, kann das Schubfeld und/oder deren Abdeckung eine flächige Ausnehmung oder einen dementsprechenden Durchbruch aufweisen, wodurch einerseits Bauraum oder Zugangsraum geschaffen wird und anderseits eine vorteilhafte Gewichtsreduktion erzielt wird. Schließlich kann es vorteilhaft sein, wenn die Randkante(n) des Schubfeldes zur Fahrbahn hin umgestellt ist/sind, da dann das Risiko, dass bei einer unfallbedingten Verformung des Schubfeldes bspw. der darüber liegende Kraftstofftank beschädigt wird, reduziert wird.

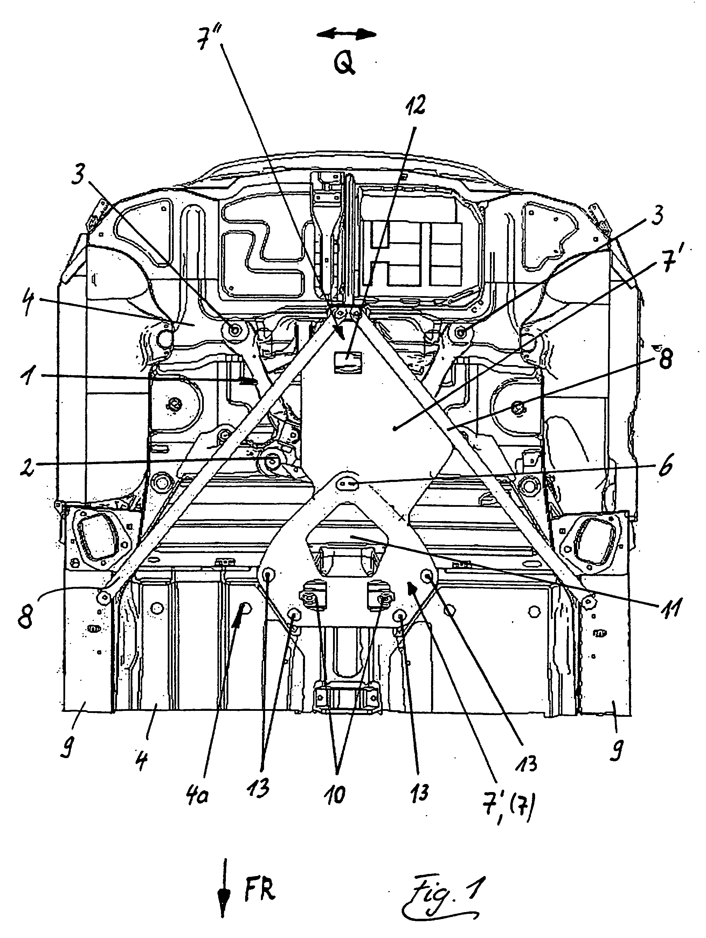

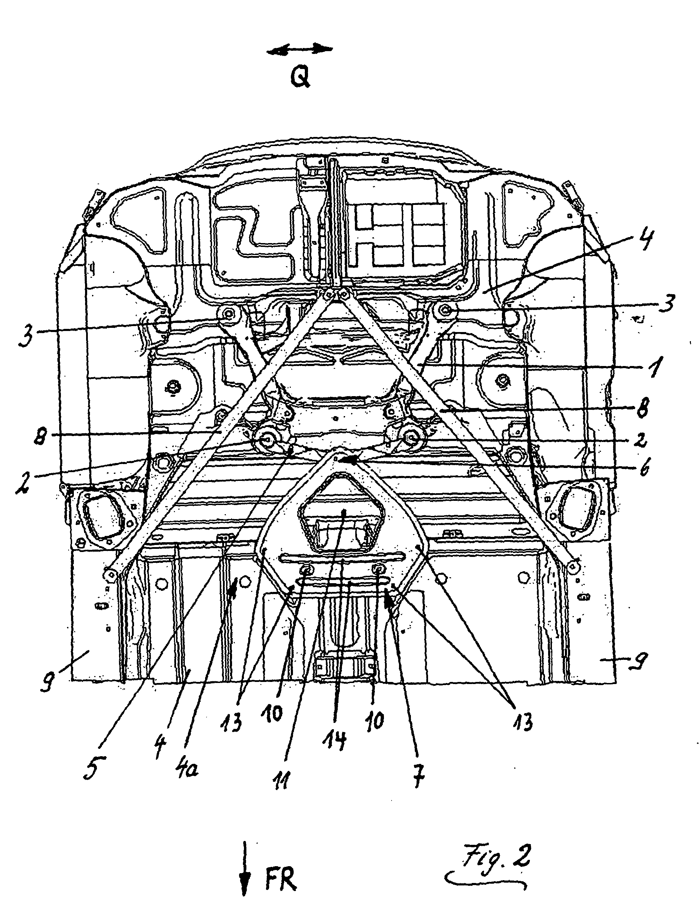

Im folgenden wird die Erfindung anhand eines bevorzugten Ausführungsbeispieles weiter erläutert, wobei die beigefügte **Figur 1** eine Teil-Ansicht von unten auf den Fzg.-Boden im Bereich der Hinterachse eines erfindungsgemäßen PKW's zeigt, während in der vergleichbaren Darstellung gemäß **Figur 2** die bereits erwähnte Abdeckung des Schubfeldes entfernt ist.

Mit der Bezugsziffer 1 ist ein Fahrschemel bezeichnet, der sich über zwei vordere Befestigungspunkte 2 sowie über zwei hintere Befestigungspunkte 3 an der Fzg.-Karosserie bzw. am Bodenblech 4 derselben abstützt. An diesem Fahrschemel 1 sind nicht dargestellte Lenker aufgehängt, die die beiden ebenfalls nicht dargestellten Hinterachs-Radträger führen. Insoweit handelt es sich um eine übliche und dem Fachmann geläufige Konstruktion einer PKW-Hinterachsaufhängung, wobei die Fahrtrichtung des PKW noch durch den Pfeil FR (=Längsrichtung des Fahrzeugs) und die Querrichtung des Fzg.'s/PKW's durch den Doppelpfeil Q dargestellt ist.

Wie am besten aus **Fig.2** hervorgeht, verläuft im wesentlichen zwischen den beiden vorderen Befestigungspunkten 2 des Fahrschemels 1 im wesentlichen in Fzg.-Querrichtung Q eine sog. Schubstrebe 5, die mit ihren Enden am Fahrschemel 1 befestigt, insbesondere angeschraubt ist. Im wesentlichen an deren Mittenabschnitt 6 (d.h. in Fzg.-Querrichtung Q betrachtet im Bereich der Fzg.-Mitte) ist ein sog. Schubfeld 7 befestigt, bei welchem es sich um ein flächiges Blechformteil handelt. Dieses im wesentlichen ebene Blechformteil oder Schubfeld 7 liegt im wesentlichen parallel zur Fahrbahnoberfläche und ist in seinem vorderen Bereich am dort ebenfalls parallel zur Fahrbahnoberfläche verlaufenden Bodenblech 4 bzw. am sog. Fersenblech 4a desselben befestigt. Das Fersenblech 4a ist dabei derjenige Abschnitt des Bodenbleches 4, das den hinteren Fzg.-Innenraum bzw. den hinteren Fußraum nach unten begrenzt und auf welchem üblicherweise die Fuß-Fersen von Fond-Passagieren des PKW's abgestellt werden.

Sowohl mit der Schubstrebe 5 als auch mit dem Fersenblech 4a ist das Schubfeld 7 verschraubt, und zwar mit der Schubstrebe 5 in deren Mittenbereich 6 über hier zwei Befestigungs-Schrauben, die ebenfalls die Bezugsziffer 6 tragen. Zur Befestigung des Schubfeldes 7 am Fersenblech 4a sind hier vier Schrauben 13 vorgesehen, die bezüglich der Fzg.-Mittenachse symmetrisch angeordnet in Fzg.-Querrichtung Q weiter außen als die Befestigungs-Schrauben 6 liegen, nachdem sich die in Fzg.-Querrichtung Q gemessene Breite des Schubfeldes 7 in Fahrtrichtung FR betrachtet vergrößert. Wie weiter oben bereits erläutert wurde kann aufgrund dieser Formgebung das Schubfeld 7 optimal Kräfte aus dem Fahrschemel 1 in das Fersenblech 4a einleiten bzw. optimal den Fahrschemel 1 zusätzlich am Fersenblech 4a abstützen.

Im Bereich der Schrauben 13 verlaufen im Schubfeld 7 in Fzg.-Querrichtung Q (hier) hintereinander angeordnet zwei Sicken 14, die der Stabilitätserhöhung des Schubfeldes 7 selbst dienen. Im Falle eines Seitencrashes, d.h. bei einem seitlichen Aufprall in Fzg.-Querrrichtung Q kann hierdurch eine verbesserte Kraftübertragung auf die gegenüberliegende Fahrzeug-Seite erfolgen, woraus geringere Verformungen der Karosserie resultieren.

Wie **Fig.1** zeigt, ist auf das Schubfeld 7 von unten, d.h. von der Fahrbahnoberfläche her eine Abdeckung 7' aufgebracht, die über die Schubstrebe 5 hinaus nach hinten, d.h. gegen Fahrtrichtung FR verlängert ist, und die in der Darstellung nach **Fig.2** entfernt wurde. Dabei ist der hintere Endabschnitt 7" der Abdeckung 7' zusammen mit V-förmig angeordneten Streben 8, die im wesentlichen von der Fahrzeug-Mittenlinie aus zu beidseitig im wesentlichen zwischen den Hinterrädern und Vorderrädern vorgesehenen Längsträgern 9 verlaufen und mit diesen verschraubt sind, am Karosserie-Bodenblech 4 befestigt. Wie ersichtlich folgt die Außenkontur des hinteren Bereiches der Abdeckung 7' zumindest abschnittsweise den besagten V-förmig angeordneten Streben 8.

Die Abdeckung 7' sowie das Schubfeld 7 sind mit miteinander korrespondierenden Aufnahmen 10 zur Befestigung der Fahrzeug-Abgasanlage versehen und weisen eine flächige Ausnehmung 11 oder einen dementsprechenden Durchbruch auf, wobei sich die Ausnehmungen 11 von Schubfeld 7 und Abdeckung 7' überdecken. Hierdurch ergibt sich nicht nur eine Gewichtserspamis, sonden es kann auch Bauraum geschaffen werden, wie dies bereits vor der Bezugnahme auf dieses Ausführungsbeispiel erläutert wurde. Gleiches gilt bezüglich eines im hinteren Bereich der Abdeckung 7' vorgesehenen Einlaufkanales 12 für den bei Fahrt an der Oberfläche der Abdeckung 7' entlangstreichenden Luftstrom. Wie aus **Fig.2** noch hervorgeht, sind die Randkanten des gegenüber der Abdeckung 7' massiveren, d.h. aus einem dickeren Blech geformten Schubfeldes 7 zur Fahrbahn hin umgestellt, wobei noch darauf hingewiesen sei, dass dies sowie eine Vielzahl weiterer Details insbesondere konstruktiver Art durchaus abweichend vom gezeigten Ausführungsbeispiel gestaltet sein kann, ohne den Inhalt der Patentansprüche zu verlassen.

### Bezugszeichenliste:

- 1: Fahrschemel
- 2: vordere Befestigungspunkte von 1 an 4
- 3: hintere Befestigungspunkte von 1 an 4
- 4: Bodenblech
- 4a: Fersenblech
- 5: Schubstrebe
- 6: Mittenabschnitt von 5 = Befestigungs-Schrauben für 7
- 7: Schubfeld
- 7': Abdeckung für 7
- 7": Endabschnitt von 7'
- 8: Strebe
- 9: Längsträger
- 10: Aufnahme zur Befestigung einer Abgasanlage
- 11: Ausnehmung oder Durchbruch
- 12: Einlaufkanal
- 13: Schrauben zur Befestigung von 7 and 4a
- 14: Sicke
- FR: Fahrtrichtung
- Q: Fahrzeug-Querrichtung

## Patentansprüche

1. Personenkraftwagen mit Einzelradaufhängung an der Hinterachse, wobei jeweils zumindest zwei der die beiden Hinterachs-Radträger führenden Lenker an einem gemeinsamen Fahrschemel (1) angebunden sind, der sich über zwei vordere sowie hintere Befestigungspunkte (2, 3) an der Fahrzeug-Karosserie abstützt, und wobei zwischen den beiden vorderen Befestigungspunkten (2) in Fahrzeug-Querrichtung (Q) eine mit ihren Enden am Fahrschemel (1) angelenkte Schubstrebe (5) verläuft,
**dadurch gekennzeichnet, dass** die Schubstrebe (5) über ein flächiges sog. Schubfeld (7) an dem in Fahrtrichtung (FR) betrachtet vor der Hinterachse liegenden und parallel verlaufenden Fersenblech (4a) der Karosserie abgestützt ist, das den hinteren Fahrzeuginnenraum nach unten begrenzt.

2. Personenkraftwagen nach Anspruch 1,
**dadurch gekennzeichnet, dass** das als Blechformteil ausgebildete Schubfeld (7) einerseits mit der Schubstrebe (5) in deren Mittenabschnitt (6) und andererseits an mehreren Stellen des Karosserie-Fersenbleches (4a) verschraubt ist.

3. Personenkraftwagen nach Anspruch 1 oder 2,
**dadurch gekennzeichnet, dass** das Schubfeld (7) oder eine auf dieses aufgebrachte Abdeckung (7') über die Schubstrebe (5) hinaus nach hinten verlängert ist.

4. Personenkraftwagen nach Anspruch 3,
**dadurch gekennzeichnet, dass** der hintere Endabschnitt (7") der Abdeckung (7') oder des Schubfeldes zusammen mit V-förmig angeordneten Streben (8), die im wesentlichen von der Fahrzeug-Mittenlinie aus zu den beidseitig im wesentlichen zwischen den Hinterrädern und Vorderrädern vorgesehenen Längsträgern (9) verlaufen, am Karosserie-Bodenblech (4) befestigt ist.

5. Personenkraftwagen nach einem der vorangegangenen Ansprüche,
**dadurch gekennzeichnet, dass** das Schubfeld (7) und/oder dessen Abdeckung (7') mit zumindest einer in Fahrzeug-Querrichtung (Q) verlaufenden Sicke (14) versehen ist.

6. Personenkraftwagen nach einem der vorangegangenen Ansprüche,
**dadurch gekennzeichnet, dass** das Schubfeld (7) und/oder dessen Abdeckung (7') mit Aufnahmen (10) zur Befestigung der Fahrzeug-Abgasanlage versehen ist.

7. Personenkraftwagen nach einem der vorangegangenen Ansprüche,
**dadurch gekennzeichnet, dass** das Schubfeld (7) und/oder dessen Abdeckung (7') eine flächige Ausnehmung (11) aufweist.

8. Personenkraftwagen nach einem der vorangegangenen Ansprüche,
**dadurch gekennzeichnet, dass** das Schubfeld (7) und/oder dessen Abdeckung (7') einen Einlaufkanal (12) für den bei Fahrt an der Oberfläche entlangstreichenden Luftstrom aufweist.

9. Personenkraftwagen nach einem der vorangegangenen Ansprüche,
**dadurch gekennzeichnet, dass** die Randkante(n) des Schubfeldes (7) zur Fahrbahn hin umgestellt ist/sind.

## Claims

1. Passenger car with independent suspension at the rear axle, wherein, in each case, at least two of the suspension links guiding the two rear axle hub carriers are connected to a common suspension subframe (1) which is supported on the vehicle body via two front and rear fastening points (2, 3), and wherein a thrust strut (5) articulated by its ends to the suspension subframe (1) extends substantially between the two front fastening points (2) in the transverse direction (Q) of the vehicle, **characterised in that** the thrust strut (5) is supported via a flat so-called thrust field (7) on the heel plate (4a) of the body which is located, viewed in the direction (FR) of travel, upstream from the rear axle and extends in parallel, the heel plate downwardly delimiting the rear interior of the vehicle.

2. Passenger car according to claim 1, **characterised in that** the thrust field (7) formed as a sheet metal shaped part is screwed, on the one hand, to the central section (6) of the thrust strut (5) and, on the other hand, to a plurality of points of the heel plate (4a) of the body.

3. Passenger car according to claim 1 or 2, **characterised in that** the thrust field (7) or a cover (7') provided thereon is extended at the rear beyond the thrust strut (5).

4. Passenger car according to claim 3, **characterised in that** the rear end section (7") of the cover (7') or of the thrust field is fastened to the body floor pan (4) together with struts (8) arranged in a V-shape which extend substantially from the centre line of the vehicle to the longitudinal carriers (9) provided on either side substantially between the rear wheels and front wheels.

5. Passenger car according to any one of the preceding claims, **characterised in that** the thrust field (7) and/or its cover (7') is provided with at least one bead (14) extending in the transverse direction (Q) of the vehicle.

6. Passenger car according to any one of the preceding claims, **characterised in that** the thrust field (7) and/or its cover (7') is/are provided with receivers (10) for fastening the vehicle exhaust system.

7. Passenger car according to any one of the preceding claims, **characterised in that** the thrust field (7) and/or its cover (7') has/have a flat recess (11).

8. Passenger car according to any one of the preceding claims, **characterised in that** the thrust field (7) and/or its cover (7') has/have an inlet channel (12) for the air stream passing along the surface during travel.

9. Passenger car according to any one of the preceding claims, **characterised in that** the edge(s) of the thrust field (7) is/are adjusted towards the road.

## Revendications

1. Véhicule léger possédant une suspension à roues indépendantes sur l'essieu arrière, dans lequel au moins deux des bras qui guident les deux supports de roues de l'essieu arrière sont reliés à un berceau de train roulant commun (1) qui prend appui sur la carrosserie du véhicule par deux points de fixation avant ainsi que par deux points de fixation arrière (2, 3) et dans lequel, entre les deux points de fixation avant (2), dans la direction transversale (Q) du véhicule, s'étend une jambe de force (5) articulée au berceau de train roulant (1) par ses deux extrémités,
**caractérisé en ce que**
la jambe de force (5) prend appui, par l'intermédiaire d'un panneau plat, dit de poussée (7), sur la tôle de talons (4a) de la carrosserie qui limite vers le bas le volume intérieur arrière du véhicule, et qui se trouve en avant de l'essieu arrière, vu dans le sens de la marche (FR), et parallèlement.

2. Véhicule léger selon la revendication 1,
**caractérisé en ce que**
le panneau de poussée (7), constitué par une pièce de tôle mise en forme est boulonné, d'une part, à la jambe de force (5) dans sa région centrale (6) et, d'autre part, sur plusieurs zones de la tôle de talons (4a) de la carrosserie.

3. Véhicule léger selon la revendication 1 ou 2,
**caractérisé en ce que**
le panneau de poussée (7), ou un cache (7') fixé à ce panneau, est prolongé vers l'arrière au-delà de la jambe de force (5).

4. Véhicule léger selon la revendication 3,
**caractérisé en ce que**
le segment terminal arrière (7") du cache (7') ou du panneau de poussée est fixé à la tôle de plancher (4) de la carrosserie, avec des entretoises (8) disposées en V, qui s'étendent sensiblement de l'axe médian du véhicule jusqu'aux longerons (9) prévus des deux côtés sensiblement entre les roues arrière et les roues avant.

5. Véhicule léger selon une des revendications précédentes,
**caractérisé en ce que**
le panneau de poussée (7) et/ou son cache (7') est ou sont munis d'au moins une moulure (14) s'étendant dans la direction transversale (Q) du véhicule.

6. Véhicule léger selon une des revendications précédentes,
**caractérisé en ce que**
le panneau de poussée (7) ou son cache (7') est ou sont munis de logements (10) pour la fixation de la conduite d'échappement du véhicule.

7. Véhicule léger selon une des revendications précédentes,
**caractérisé en ce que**
le panneau de poussée (7) et/ou son cache (7') présente(nt) un évidement (11) de la surface.

8. Véhicule léger selon une des revendications précédentes,
**caractérisé en ce que**
le panneau de poussée (7) et/ou son cache (7') présente(nt) un conduit d'entrée (12) pour le flux d'air qui circule le long de la surface pendant la marche.

9. Véhicule léger selon une des revendications précédentes,
**caractérisé en ce que**
le ou les bords du panneau de poussée (7) est ou sont rabattu(s) en direction de la chaussée.
